# EUROPÄISCHE PATENTSCHRIFT

(11) **EP 2 141 562 B1**
(45) Veröffentlichungstag und Bekanntmachung des Hinweises auf die Patenterteilung: **06.03.2013**
(21) Anmeldenummer: 08011770.8
(22) Anmeldetag: 30.06.2008
(51) Int. Cl.: H04L 12/00, H04L 29/00, H04L 29/08, G05B 19/418

(54) **Verfahren zur Bereitstellung von Diensten in einem mehrere vernetzte Rechnereinheiten umfassenden Automatisierungssystem, Computerprogramm und Automatisierungssystem**
Method for providing services in an automation system encompassing several networked computer units, computer program and automation system
Procédé de préparation de services dans un système d'automatisation comprenant plusieurs unités informatiques en réseau, programme informatique et système d'automatisation

(43) Veröffentlichungstag der Anmeldung: 06.01.2010
(73) Patentinhaber: Siemens Aktiengesellschaft, 80333 München (DE)
(72) Erfinder: Dingfelder, Sabine, 91088 Bubenreuth (DE); Schneider, Dieter, 76744 Wörth (DE)

(56) Entgegenhaltungen:
- US-A1- 2004 230 643
- US-B1- 6 668 205

## Beschreibung

Bei in einem Automatisierungssystem bereitgestellten Diensten, die zahlreiche Dienstkomponenten umfassen, ist das auf eine Dienstanforderung am spätesten vorliegende Teilergebnis ein entscheidender Faktor für eine Gesamtantwortzeit des jeweiligen Dienstes. Dies ist insbesondere kritisch, wenn Antwortzeiten für eine Bearbeitung von Dienstanforderungen über Timeout-Schwellwerten liegen, oder wenn es zu einem Abbruch von Kommunikationsverbindungen kommt. Besondere Anforderungen in der Automatisierungstechnik resultieren dabei aus einem Meldungsverkehr mit verhältnismäßig vielen, aber relativ kurzen Nachrichten. Daneben ist einer Echtzeitfähigkeit eines Automatisierungssystems und seiner Systemkomponenten Rechnung zu tragen.

Entsprechend bisherigen Lösungen werden Ergebnisse zu einer Dienstanforderung erst dann an eine dienstanfordernde Rechnereinheit übermittelt, wenn eine komplette Bearbeitung der Dienstanforderung erfolgt ist und sämtliche Teilergebnisse vorliegen. Bis sämtliche Teilergebnisse vorliegen muß also seitens der dienstanfordernden Rechnereinheit auf eine Beantwortung der Dienstanforderung gewartet werden, obwohl unter Umständen bereits durch die dienstanfordernde Rechnereinheit verwertbare Teilergebnisse vorliegen. Besonders ungünstig wirkt sich dies häufig bei Diensten aus, deren Dienstkomponenten gemeinschaftlich durch mehrere dienstbereitstellende Rechnereinheiten verfügbar gemacht werden.

Aus US 2004/230643 A1 ist ein Verfahren zur Bereitstellung von Diensten in einem mehrere Rechnereinheiten umfassen System bekannt, bei dem Dienste mittels Enterprise Application Integration verfügbar gemacht werden. Dienste werden dabei über einen einheitlichen Find-Bind-Execute-Mechanismus aufgerufen. Darüber hinaus werden zwischen einem Client und einem Server TCP/IP-Pakete übermittelt, die Ergebnisse von logisch zusammenhängenden Operationen zusammenfassen können. Beispielsweise kann vorab ein Teilergebnis in einem TCP/IP-Paket zusammengefaßt werden, wenn das Ergebnis hinsichtlich seiner Nutzdaten zu groß für ein TCP/IP-Paket ist.

Der vorliegenden Erfindung liegt die Aufgabe zugrunde, ein Verfahren zur schnellen und effizienten Bereitstellung von Diensten in einem Automatisierungssystem zu schaffen, sowie eine geeignete technische Realisierung des Verfahrens anzugeben.

Diese Aufgabe wird erfindungsgemäß durch ein Verfahren mit den in Anspruch 1 angegebenen Merkmalen, durch ein Computerprogramm mit den in Anspruch 9 angegebenen Merkmalen sowie durch ein Automatisierungssystem mit den in Anspruch 10 angegebenen Merkmalen gelöst. Vorteilhafte Weiterbildungen der vorliegenden Erfindung sind in den abhängigen Ansprüchen angegeben.

Erfindungsgemäß werden zur Bereitstellung von Diensten in einem mehrere vernetzte Rechnereinheiten umfassenden Automatisierungssystem auf Seiten einer dienstanfordernden Rechnereinheit Dienstanforderungen nach dienstbereitstellenden Rechnereinheiten unterteilt und an diese zur Bearbeitung übermittelt. Dienste des Automatisierungssystems werden dabei innerhalb einer dienstorientierten Architektur bereitgestellt. Auf Seiten einer dienstbereitstellenden Rechnereinheit empfangene Dienstanforderungen werden in logisch zusammenhängende Teilergebnisse liefernde Operationen unterteilt. Die dienstbereitstellende Rechnereinheit übermittelt bereits bei Vorliegen von einer Operation einer Dienstanforderung zugeordneten logisch zusammenhängenden Teilergebnissen eine Meldung mit den logisch zusammenhängenden Teilergebnissen an die dienstanfordernde Rechnereinheit. Die übermittelten Teilergebnisse sind unkomprimierte Daten. Die vorliegende Erfindung bietet den Vorteil, daß Dienste schnell und effizient ohne unnötige Ressourcenbeanspruchung in einem Automatisierungssystem bereitgestellt werden können.

Dienstorientierte bzw. serviceorientierte Architekturen (SOA) zielen darauf ab, Dienste in komplexen Organisationseinheiten zu strukturieren und für eine Vielzahl von Nutzern verfügbar zu machen. Dabei werden beispielsweise vorhandene Komponenten eines Datenverarbeitungssystems, wie Programme, Datenbanken, Server oder Websites, so koordiniert, daß von den Komponenten bereitgestellte Leistungen zu Diensten zusammen gefaßt und berechtigten Nutzern zur Verfügung gestellt werden. Serviceorientierte Architekturen ermöglichen eine Anwendungsintegration, indem Komplexität einzelner Teilkomponenten eines Datenverarbeitungssystems hinter standardisierten Schnittstellen verborgen wird. Dies erleichtert gerade in verteilten Automatisierungssystemen eine Bereitstellung von Komponentenfunktionen.

Entsprechend einer bevorzugten Ausgestaltung der vorliegenden Erfindung wird eine Unterteilung einer Dienstanforderung nach dienstbereitstellenden Rechnereinheiten durch einen der dienstanfordernden Rechnereinheit zugeordneten Verzeichnisdienst durchgeführt. Dies ist besonders effizient, wenn der Verzeichnisdienst für eine Gemeinsame Nutzung durch mehrere dienstanfordernde Einheiten verfügbar gemacht wird.

Eine Ermittlung logisch zusammenhängender Operationen erfolgt vorzugsweise durch Auswertung einer von einer Dienstanforderung umfaßter Kennzeichnung logisch zusammenhängender Teilergebnisse. Die Kennzeichnung logisch zusammenhängender Teilergebnisse kann beispielsweise durch die dienstanfordernde Rechnereinheit erfolgen. Bei fehlender Kennzeichnung übermittelt die dienstbereitstellende Rechnereinheit vorteilhafterweise im wesentlichen unmittelbar nach Vorliegen eines der Dienstanforderung zugeordneten einzelnen Teilergebnisses eine Meldung mit dem Teilergebnis an die dienstanfordernde Rechnereinheit. Auf diese Weise ergibt sich auch ohne Kennzeichnung und Auswertung logisch zusammengehöriger Teilergebnisse eine schnelle und effiziente Bereitstellung von Ergebnissen einer Dienstanforderung in einem Automatisierungssystem.

Die Erfindung wird nachfolgend an einem Ausführungsbeispiel anhand der Zeichnung näher erläutert. Es zeigt
- Figur 1: eine schematische Darstellung eine Automatisie rungssystems zur Durchführung eines Verfahrens zur Bereitstellung von Diensten nach dem Stand der Technik,
- Figur 2: eine schematische Darstellung eine Automatisie rungssystems zur Durchführung eines Verfahrens zur Bereitstellung von Diensten entsprechend der vor liegenden Erfindung.

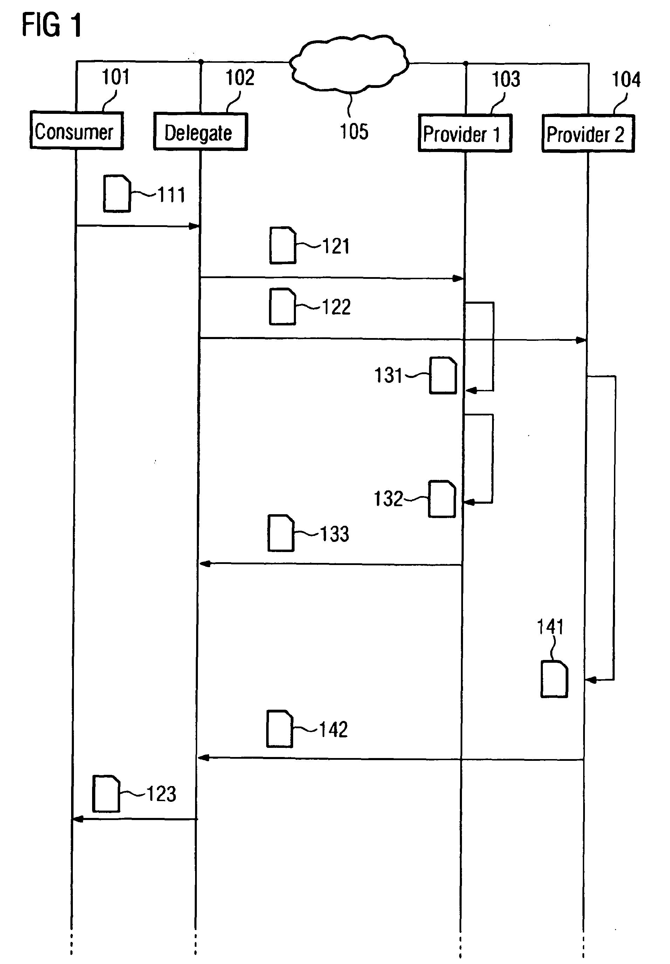

Das in Figur 1 dargestellte Automatisierungssystem umfaßt mehreren über ein Kommunikationsnetz 105 miteinander verbundenen Rechnereinheiten 101-104 an Netzknoten des Automatisierungssystems. Zur Nutzung eines im Automatisierungssystem bereitgestellten Dienstes wird von einer dienstanfordernden Rechnereinheit 101 eine Meldung 111 mit einer Dienstanforderung an eine Rechnereinheit 102 übermittelt, die einen Verzeichnisdienst bereitstellt. Durch den Verzeichnisdienst erfolgt eine Unterteilung der Dienstanforderung nach dienstbereitstellenden Rechnereinheiten.

Im vorliegenden Fall werden der Dienstanforderung zugeordnete Dienstkomponenten durch eine erste dienstbereitstellende Rechnereinheit 103 und durch eine zweite dienstbereitstellende Rechnereinheit 104 verfügbar gemacht. Die den Verzeichnisdienst bereitstellende Rechnereinheit 102 löst daher die von der dienstanfordernden Rechnereinheit 101 empfangene Dienstanforderung in zwei Dienstanforderungen auf und übermittelt jeweils eine Meldung 121, 122 mit einer Dienstanforderung an die erste dienstbereitstellende Rechnereinheit 103 bzw. an die zweite dienstbereitstellende Rechnereinheit 104. Die jeweiligen Dienstanforderungen werden dann durch die jeweilige dienstbereitstellende Rechnereinheit 103, 104 bearbeitet. Infolge der an die erste dienstbereitstellende Rechnereinheit 103 gerichteten Dienstanforderung werden ein erstes Teilergebnis 131 und ein zweite Teilergebnis 132 ermittelt. Die zweite dienstbereitstellende Rechnereinheit 104 ermittelt ein drittes Teilergebnis 141.

Erst nach Ermittlung sämtlicher von der jeweiligen dienstbereitstellenden Rechnereinheit 103, 104 bereitzustellender Teilergebnisse 131, 132, 141 übermittelt die jeweilige dienstbereitstellende Rechnereinheit 103, 104 eine Meldung 133, 142 mit sämtlichen Teilergebnissen an die den Verzeichnisdienst bereitstellende Rechnereinheit 102. Die den Verzeichnisdienst bereitstellende Rechnereinheit 102 sammelt sämtliche zu einer verteilten Dienstanforderung gehörige Teilergebnisse und übermittelt bei Vorliegen aller Teilergebnisse eine Meldung 123 mit den Teilergebnissen an die dienstanfordernde Rechnereinheit 101. Auf Seiten der dienstanfordernden Rechnereinheit 101 kann daher eine Auswertung von Teilergebnissen der Dienstanforderung erst nach Empfang der Meldung 123 mit den für die Dienstanforderung ermittelten Teilergebnissen erfolgen.

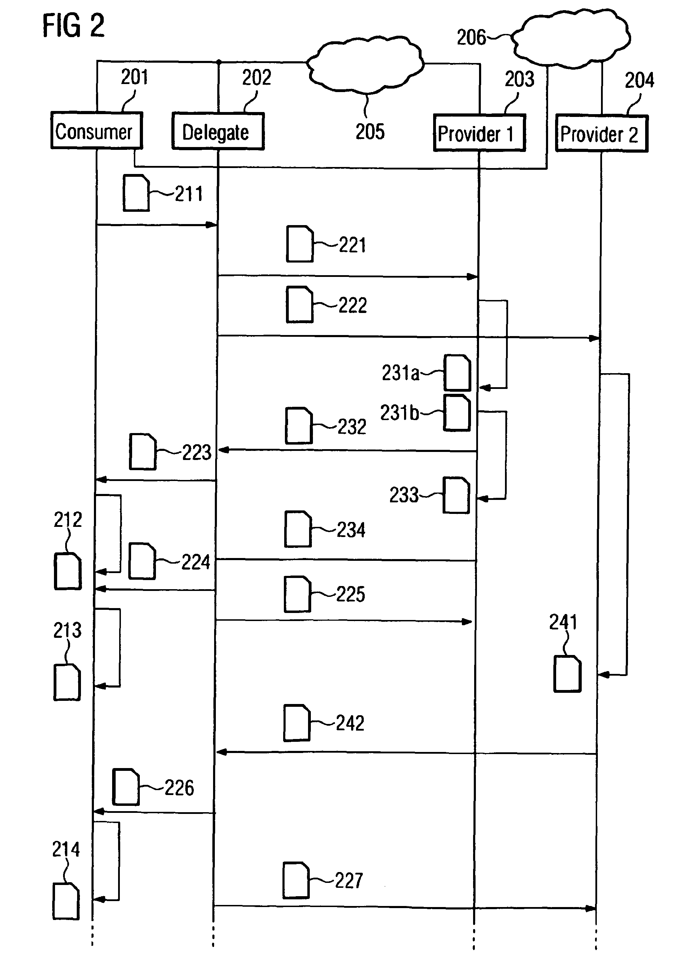

Auch das in Figur 2 dargestellte Automatisierungssystem entsprechend der vorliegenden Erfindung umfaßt mehrere Rechnereinheiten 201-204 an Netzknoten des Automatisierungssystems, wobei die Rechnereinheiten 201-203 über ein gesichertes Kommunikationsnetz 205 miteinander verbunden sind, während die Rechnereinheiten 202, 204 über ein ungesichertes Kommunikationsnetz 206 verbunden sind. In dem in Figur 2 dargestellten Automatisierungssystem sind Dienste innerhalb einer dienstorientierten Architektur bereitgestellt.

Zur Nutzung eines im Automatisierungssystem bereitgestellten Dienstes wird von einer dienstanfordernden Rechnereinheit 201 eine Meldung 211 mit einer Dienstanforderung an eine Rechnereinheit 202 übermittelt, die einen Verzeichnisdienst verfügbar macht. Analog zu obigen Ausführungen erfolgt durch den Verzeichnisdienst eine Unterteilung der Dienstanforderung nach dienstbereitstellenden Rechnereinheiten. Die dienstanfordernde Rechnereinheit 201 und die den Verzeichnisdienst bereitstellende Rechnereinheit 202 können grundsätzlich auch zu einer Rechnereinheit zusammengefaßt sein, so daß zwischen der dienstanfordernden Rechnereinheit 201 und der den Verzeichnisdienst bereitstellenden Rechnereinheit 202 ausgetauschte Meldungen als Meldungverkehr zwischen logischen Instanzen betrachtet werden können.

Der Dienstanforderung zugeordnete Dienstkomponenten werden analog zu obigem Anwendungsbeispiel durch eine erste dienstbereitstellende Rechnereinheit 203 und durch eine zweite dienstbereitstellende Rechnereinheit 204 verfügbar gemacht. Die den Verzeichnisdienst bereitstellende Rechnereinheit 202 löst die von der dienstanfordernden Rechnereinheit 201 empfangene Dienstanforderung in zwei Dienstanforderungen auf und übermittelt jeweils eine Meldung 221, 222 mit einer Dienstanforderung an die erste dienstbereitstellende Rechnereinheit 203 bzw. an die zweite dienstbereitstellende Rechnereinheit 204. Die jeweiligen Dienstanforderungen werden dann durch die jeweilige dienstbereitstellende Rechnereinheit 203, 204 bearbeitet. Infolge der an die erste dienstbereitstellende Rechnereinheit 103 gerichteten Dienstanforderung werden ein erstes Teilergebnis 231a, ein zweites Teilergebnis 231b und ein drittes Teilergebnis 233 ermittelt. Die zweite dienstbereitstellende Rechnereinheit 204 ermittelt ein viertes Teilergebnis 241.

Die durch die Rechnereinheiten 203-204 bereitgestellten Dienstkomponenten dienen im vorliegenden Ausführungsbeispiel zur Ansteuerung von meßtechnischer oder aktorischer Peripherie der Rechnereinheiten 203-204, wie Sensoren oder Roboter. Im Hinblick auf einen Meldungsaustausch zur Steuerung und Überwachung der Rechnereinheiten 203-204 ist sicherzustellen, daß Meldungen auf einem Weg von einem Sender zu einem Empfänger nicht verfälscht werden. Andernfalls könnte dies zu Störungen oder Schäden im Automatisierungssystem führen. Außerdem kann ein Interesse darin bestehen, daß beispielsweise ein infolge eines Ablaufs eines Steuerungsprogramms erfaßtes Meßergebnis nur durch einen berechtigten Benutzer abfragbar ist und eine übermittelte Meldung mit dem Meßergebnis nicht durch unautorisierte Benutzer abgefangen und ausgelesen werden kann. Ein Benutzer kann hierbei auch ein anderes Gerät innerhalb des Automatisierungssystems sein.

Zur Sicherung der Kommunikation innerhalb des Automatisierungssystems werden zunächst Rechnereinheiten erfaßt, die über ein ungesichertes Netzwerk miteinander verbunden sind. Anhand der erfaßten Netzknoten wird eine Auswahl von Netzknoten ermittelt, deren Kommunikation auf einer Netzwerkprotokollebene oberhalb einer Transportschicht zu sichern ist. Im vorliegenden Fall sind dies die Netzknoten, an denen die Rechnereinheiten 202, 204 angeschlossen sind. Auf Basis obiger Auswahl von Netzknoten werden automatisch netzknotenindividuelle digitale Signaturschlüssel an die Rechnereinheiten 202, 204 übermittelt. Eine Kommunikation zwischen den Rechnereinheiten 202, 204 wird anhand der übermittelten Signaturschlüssel gegen eine Verfälschung gesichert. Zur Sicherung der Kommunikation zwischen den Rechnereinheiten 202, 204 werden von einem sendenden Netzknoten an einen empfangenden Netzknoten übermittelte Daten mittels eines dem sendenden Netzknoten zugeordneten Signaturschlüssels digital signiert. Auf Seiten des empfangenden Netzknotens werden empfangene digital signierte Daten mittels eines dem sendenden Netzknoten zugeordneten digitalen Zertifikats verifiziert. Zur Sicherung der Kommunikation wird dabei als Netzwerkprotokoll Secure Socket Layer (SSL) bzw. Transport Layer Security (TLS) verwendet.

Bei dem Automatisierungssystem entsprechend Figur 2 sind die dienstbereitstellenden Rechnereinheiten 203-204 auch zur Unterteilung von empfangenen Dienstanforderungen in logisch zusammenhängende Teilergebnisse liefernde Operationen ausgebildet. Im vorliegenden Fall sind das erste Teilergebnis 231a und das zweite Teilergebnis 231b logisch zusammenhängende Teilergebnisse, die durch eine Operation ermittelt werden. Eine Ermittlung logisch zusammenhängender Operationen erfolgt, im vorliegenden Ausführungsbeispiel durch Auswertung einer von einer Dienstanforderung umfaßten Kennzeichnung logisch zusammenhängender Teilergebnisse, wobei logisch zusammenhängender Teilergebnisse durch die dienstanfordernde Rechnereinheit 201 gekennzeichnet werden.

Die dienstbereitstellenden Rechnereinheiten 203-204 übermitteln Meldungen 232, 234, 242 mit einer Dienstanforderung zugeordneten logisch zusammenhängenden Teilergebnissen an die den Verzeichnisdienst bereitstellende Rechnereinheit 202, sobald das jeweilige Teilergebnis vorliegt. Bei einer fehlenden Kennzeichnung logische zusammenhängender Teilergebnisse übermittelt die jeweilige dienstbereitstellende Rechnereinheit 203, 204 im wesentlichen unmittelbar nach Vorliegen eines einzelnen Teilergebnisses eine Meldung mit dem Teilergebnis an die den Verzeichnisdienst bereitstellende Rechnereinheit 202.

Die den Verzeichnisdienst bereitstellende Rechnereinheit 202 sammelt die einer Dienstanforderung zugeordneten Meldungen, bereitet diese für die jeweilige dienstanfordernde Rechnereinheit 201 auf und leitet die aufbereiteten Meldungen 223, 224, 226 entsprechend im wesentlichen umgehend weiter. Dabei handelt es sich bei den übermittelten Teilergebnissen um unkomprimierte Daten. Nach Empfang der Meldungen 223, 224, 226 mit den logisch zusammenhängenden Teilergebnissen können aus diesen durch die dienstanfordernde Rechnereinheit 201 zeitnah Steuerungscodes 212-214 zur Ansteuerung von an der dienstanfordernden Rechnereinheit angeschlossenen Feldgeräten, wie Aktoren oder Sensoren, abgeleitet werden.

Das beschriebene Verfahren wird durch ein Computerprogramm implementiert, das in einen Arbeitsspeicher eines Rechners ladbar ist und zumindest eine Codeabschnitt aufweist, bei dessen Ausführung von einer dienstanfordernden Rechnereinheit empfangene Dienstanforderungen in logisch zusammenhängende Teilergebnisse liefernde Operationen unterteilt werden, wenn das Computerprogramm im Rechner abläuft. Dienste des Automatisierungssystems sind dabei innerhalb einer dienstorientierten Architektur bereitgestellt. Außerdem wird bereits bei Vorliegen von einer Operation einer Dienstanforderung zugeordneten logisch zusammenhängenden Teilergebnissen eine Meldung mit den logisch zusammenhängenden Teilergebnissen an eine dienstanfordernde Rechnereinheit übermittelt.

Die Anwendung der vorliegenden Erfindung ist nicht auf das beschriebene Ausführungsbeispiel beschränkt.

## Patentansprüche

1. Verfahren zur Bereitstellung von Diensten in einem mehrere vernetzte Rechnereinheiten umfassenden Automatisierungssystem, bei dem
- Dienste des Automatisierungssystems innerhalb einer dienstorientierten Architektur bereitgestellt werden,
- auf Seiten einer dienstbereitstellenden Rechnereinheit (203, 204) empfangene Dienstanforderungen (221, 222) in logisch zusammenhängende Teilergebnisse (231a, 231b, 233, 241) liefernde Operationen unterteilt werden,
**dadurch gekennzeichnet, daß**
- auf Seiten einer dienstanfordernden Rechnereinheit (201, 202) Dienstanforderungen (211) nach dienstbereitstellenden Rechnereinheiten (203, 204) unterteilt und an diese zur Bearbeitung übermittelt werden,
- die dienstbereitstellende Rechnereinheit (203, 204) bereits bei Vorliegen von einer Operation einer Dienstanforderung zugeordneten logisch zusammenhängenden Teilergebnissen (231a, 231b, 233, 241) eine Meldung (232, 234, 242; 223, 224, 226) mit den logisch zusammenhängenden Teilergebnissen an die dienstanfordernde Rechnereinheit (201, 202) übermittelt, wobei die übermittelten Teilergebnisse (231a, 231b, 233, 241) unkomprimierte Daten sind.

2. Verfahren nach Anspruch 1,
bei dem eine Unterteilung einer Dienstanforderung nach dienstbereitstellenden Rechnereinheiten (203, 204) durch einen der dienstanfordernden Rechnereinheit (201) zugeordneten Verzeichnisdienst durchgeführt wird.

3. Verfahren nach einem der Ansprüche 1 oder 2,
bei dem eine Ermittlung logisch zusammenhängender Operationen durch Auswertung einer von einer Dienstanforderung umfaßten Kennzeichnung logisch zusammenhängender Teilergebnisse (231a, 231b, 233, 241) erfolgt.

4. Verfahren nach Anspruch 3,
bei dem die Kennzeichnung logisch zusammenhängender Teilergebnisse (231a, 231b, 233, 241) durch die dienstanfordernde (201, 202) Rechnereinheit erfolgt.

5. Verfahren nach einem der Ansprüche 3 oder 4,
bei dem die dienstbereitstellende Rechnereinheit (203, 204) bei fehlender Kennzeichnung im wesentlichen unmittelbar nach Vorliegen eines der Dienstanforderung zugeordneten einzelnen Teilergebnisses (231a, 231b, 233, 241) eine Meldung (232, 234, 242; 223, 224, 226) mit dem Teilergebnis an die dienstanfordernde Rechnereinheit (201, 202) übermittelt.

6. Verfahren nach einem der Ansprüche 1 bis 5,
bei dem Netzknoten mit angeschlossenen Rechnereinheiten (201, 204) erfaßt werden, die über ein ungesichertes Netzwerk (206) miteinander verbunden sind, anhand der erfaßten Netzknoten eine Auswahl von Netzknoten ermittelt wird, deren Kommunikation auf einer Netzwerkprotokollebene oberhalb einer Transportschicht zu sichern ist, anhand der Auswahl automatisch netzknotenindividuelle digitale Signaturschlüssel an von der Auswahl umfaßte Netzknoten übermittelt werden, eine Kommunikation zwischen von der Auswahl umfaßten Netzknoten anhand der übermittelten Signaturschlüssel gegen eine Verfälschung gesichert wird.

7. Verfahren nach Anspruch 6,
bei dem von einem von der Auswahl umfaßten sendenden Netzknoten an einen von der Auswahl umfaßten empfangenden Netzknoten übermittelte Daten mittels eines dem sendenden Netzknoten zugeordneten Signaturschlüssels digital signiert werden, und bei dem empfangene digital signierte Daten mittels eines dem sendenden Netzknoten zugeordneten digitalen Zertifikats verifiziert werden.

8. Verfahren nach einem der Ansprüche 6 oder 7,
bei dem als Netzwerkprotokoll zur Sicherung der Kommunikation zwischen von der Auswahl umfaßten Netzknoten Secure Socket Layer oder Transport Layer Security verwendet wird.

9. Computerprogramm zur Bereitstellung von Diensten in einem Automatisierungssystem nach Patentauspuch 10, das in einen Arbeitsspeicher eines Rechners des Automatisierungssystems ladbar ist und zumindest einen Codeabschnitt aufweist, zur Ausfähung der Schritte des Verfahrens nach Patentauspruch 1. wenn das Computerprogramm im Rechner abläuft.

10. Automatisierungssystem mit
- mehreren über ein Kommunikationsnetz (205, 206) miteinander verbundenen Rechnereinheiten (201-204) an Netzknoten des Automatisierungssystems, in dem Dienste innerhalb einer dienstorientierten Architektur bereitgestellt sind,
- einer dienstbereitstellenden Rechnereinheit (203, 204) zur Unterteilung von empfangenen Dienstanforderungen (211) in logisch zusammenhängende Teilergebnisse (231a, 231b, 233, 241) liefernde Operationen,
**gekennzeichnet durch**
- eine dienstanfordernde Rechnereinheit (201, 202) zur Unterteilung von Dienstanforderungen (211) nach dienstbereitstellenden Rechnereinheiten (203, 204) und zur Übermittlung an jeweilige dienstbereitstellende Rechnereinheiten (203, 204),
- eine der dienstbereitstellenden Rechnereinheit (203, 204) zugeordnete Übermittlungseinheit zur Übermittlung einer Meldung (232, 234, 242; 223, 224, 226) mit logisch zusammenhängenden Teilergebnissen an die dienstanfordernde Rechnereinheit (201, 202) bereits bei Vorliegen von einer Operation einer Dienstanforderung zugeordneten logisch zusammenhängenden Teilergebnissen (231a, 231b, 233, 241), wobei die übermittelten Teilergebnisse (231a, 231b, 233, 241) unkanprimierte Daten sind

## Claims

1. Method for providing services in an automation system comprising a plurality of networked computer units, in which
- services of the automation system are provided within a service-oriented architecture,
- a service-providing computer unit (203, 204) divides received service requests (221, 222) into operations delivering logically contiguous result elements (231a, 231b, 233, 241),
**characterized in that**
- a service-requesting computer unit (201, 202) divides service requests (211) on the basis of service-providing computer units (203, 204) and transmits them to the latter for handling,
- the service-providing computer unit (203, 204) transmits a message (232, 234, 242; 223, 224, 226) with the logically contiguous result elements to the service-requesting computer unit (201, 202) as early as when logically contiguous result elements (231a, 231b, 233, 241) associated with an operation from a service request are available, with the transmitted result elements (231a, 231b, 233, 241) being uncompressed data.

2. Method according to Claim 1,
in which a service request is divided on the basis of service-providing computer units (203, 204) by a directory service associated with the service-requesting computer unit (201).

3. Method according to either of Claims 1 and 2,
in which logically contiguous operations are ascertained by evaluating an identification which a service request comprises for logically contiguous result elements (231a, 231b, 233, 241) .

4. Method according to Claim 3,
in which logically contiguous result elements (231a, 231b, 233, 241) are identified by the service-requesting computer unit (201, 202).

5. Method according to either of Claims 3 and 4,
in which the service-providing computer unit (203, 204) transmits a message (232, 234, 242; 223, 224, 226) with the result element to the service-requesting computer unit (201, 202) essentially directly after an individual result element (231a, 231b, 233, 241) associated with the service request is available when an identification is missing.

6. Method according to one of Claims 1 to 5,
in which network nodes having connected computer units (201, 204) are sensed which are connected to one another by means of an unprotected network (206), the sensed network nodes are used to ascertain a selection of network nodes for which the communication on a network protocol level above a transport layer needs to be protected, the selection is automatically used to transmit network-node-individual digital signature keys to network nodes which the selection comprises, and communication between network nodes which the selection comprises is protected against corruption using the transmitted signature keys.

7. Method according to Claim 6,
in which data transmitted from a sending network node which the selection comprises to a receiving network node which the selection comprises are digitally signed by means of a signature key associated with the sending network node, and in which received digitally signed data are verified by means of a digital certificate associated with the sending network node.

8. Method according to either of Claims 6 and 7,
in which the network protocol used for protecting the communication between network nodes which the selection comprises is Secure Socket Layer or Transport Layer Security.

9. Computer program for providing services in an automation system according to Patent Claim 10, which can be loaded into a main memory of a computer in the automation system and has at least one code section, for executing the steps of the method according to Patent Claim 1 when the computer program is executed in the computer.

10. Automation system having
- a plurality of computer units (201-204), connected to one another via a communication network (205, 206), at network nodes in the automation system, in which services are provided within a service-oriented architecture,
- a service-providing computer unit (203, 204) for dividing received service requests (211) into operations delivering logically contiguous result elements (231a, 231b, 233, 241),
**characterized by**
- a service-requesting computer unit (201, 202) for dividing service requests (211) on the basis of service-providing computer units (203, 204) and for transmitting them to respective service-providing computer units (203, 204),
- a transmission unit, associated with the service-providing computer unit (203, 204), for transmitting a message (232, 234, 242; 223, 224, 226) with logically contiguous result elements to the service-requesting computer unit (201, 202) as early as when logically contiguous result elements (231a, 231b, 233, 241) associated with an operation from a service request are available, with the transmitted result elements (231a, 231b, 233, 241) being uncompressed data.

## Revendications

1. Procédé de prestation de services dans un système d'automatisation comprenant plusieurs unités informatiques en réseau, dans lequel
- des services du système d'automatisation sont procurés dans une architecture à orientation service,
- des demandes ( 221, 222 ) de service reçues du côté d'une unité ( 203, 204 ) informatique procurant un service sont subdivisées en des opérations fournissant des résultats ( 231a, 231b, 233, 241 ) partiels en liaison logiquement,
**caractérisé en ce que**
- du côté d'une unité 201, 202 ) informatique demandant un service, des demandes ( 211 ) de service vers des unités ( 203, 204 ) informatiques procurant un service sont subdivisées et sont transmises à celles-ci pour traitement,
- l'unité ( 203, 204 ) informatique procurant un service transmet, dès avant la présence de résultats ( 231a, 231b, 233, 241 ) partiels en relation logiquement associés à une opération d'une demande de service, un message ( 232, 234, 242 ; 223, 224, 226 ) ayant les résultats partiels en relation logiquement à l'unité ( 201, 202 ) informatique procurant un service, les résultats ( 231a, 231b, 233, 241 ) partiels qui sont transmis étant des données non compressées.

2. Procédé suivant la revendication 1,
dans lequel on effectue une subdivision d'une demande de service à des unités ( 203, 204 ) informatiques procurant un service par un service de répertoire associé à l'unité ( 201 ) informatique demandant un service.

3. Procédé suivant la revendication 1 ou 2,
dans lequel on effectue une détermination d'opérations en relation logiquement en exploitant une caractérisation de résultats ( 231a, 231b, 233, 241 ) partiels en relation logiquement englobée dans une demande de service.

4. Procédé suivant la revendication 3,
dans lequel on effectue la caractérisation des résultats ( 231a, 231b, 233, 241 ) partiels en relation logiquement par l'unité informatique demandant ( 201, 202 ) un service.

5. Procédé suivant l'une des revendications 3 ou 4,
dans lequel l'unité ( 203, 204 ) informatique procurant un service transmet à l'unité ( 201, 202 ) informatique demandant un service, si une caractérisation est manquante sensiblement directement après la présence d'un résultat ( 231a, 231b, 233, 241 ) partiel individuel associé à la demande de service, un message ( 232, 234, 242 ; 223, 224, 226 ) ayant le résultat partiel.

6. Procédé suivant l'une des revendications 1 à 5,
dans lequel on détecte des noeuds de réseau ayant des unités ( 201, 204 ) informatiques raccordées, qui sont reliées entre elles par un réseau ( 206 ) non sécurisé, on détermine au moyen des noeuds de réseau détectés une sélection de noeuds de réseau, dont la communication est sécurisée sur un plan de programme de réseau au dessus d'une couche de transport, on transmet au moyen de la sélection automatiquement, à des noeuds de réseau englobés par la sélection, des clés de signatures numériques propres aux noeuds de réseau, on sécurise vis-à-vis d'une fraude une communication entre la sélection des noeuds de réseau englobés au moyen des clés de signature transmises.

7. Procédé suivant la revendication 6,
dans lequel on signe numériquement, au moyen d'une clé de signature affectée au noeud de réseau émetteur, des données transmises d'un noeud de réseau émetteur englobé dans la sélection à un noeud de réseau récepteur englobé dans la sélection et dans lequel on vérifie des données signées numériquement et reçues au moyen d'un certificat numérique affecté au noeud de réseau émetteur.

8. Procédé suivant l'une des revendications 6 ou 7,
dans lequel on utilise Secure Socket Layer ou Transport Layer Security comme programme de réseau pour la sécurisation de la communication entre la sélection de noeuds de réseau englobés.

9. Programme d'ordinateur pour procurer des services dans un système d'automatisation suivant la revendication 10, qui peut être chargé dans une mémoire de travail d'un ordinateur du système d'automatisation et qui a au moins un segment de code pour la réalisation des stades du procédé suivant la revendication 1.

10. Système d'automatisation comprenant
- plusieurs unités ( 201 à 204 ) informatiques reliées entre elles par un réseau ( 205, 206 ) de communication en des noeuds de réseau du système d'automatisation, dans lequel des services sont procurés dans une architecture orientée service,
- une unité ( 203, 204 ) informatique procurant un service pour la subdivision de demandes ( 211 ) de service reçues en des opérations fournissant des résultats ( 231a, 231b, 233, 241 ) partiels en relation logiquement,
**caractérisé par**
- une unité ( 201, 202 ) informatique demandant un service pour la subdivision de demandes ( 211 ) de service vers des unités ( 203, 204 ) informatiques procurant un service et pour la transmission aux unités ( 203, 204 ) informatiques procurant un service respectif,
- une unité de transmission associée à l'unité ( 203, 204 ) informatique procurant un service pour la transmission d'un message ( 232, 234, 242 ; 223, 224, 226 ), ayant des résultats partiels en relation logiquement, à l'unité ( 201, 202 ) informatique demandant un service, dès avant la présence de résultats ( 231a, 231b, 233, 241 ) partiels en relation logiquement associés à une opération d'une demande de service, les résultats ( 231a, 231b, 233, 241 ) partiels transmis étant des données non compressées.
